# FASCICULE DE BREVET EUROPEEN

(11) **EP 0 701 355 B1**
(45) Date de publication et mention de la délivrance du brevet: **17.11.2004**
(21) Numéro de dépôt: 95401749.7
(22) Date de dépôt: 24.07.1995
(51) Int. Cl.: H04L 29/06

(54) **Compression de paquets de données**
Datenpaketkompression
Data packet compression

(30) Priorité: 09.09.1994 FR 9410881
(43) Date de publication de la demande: 13.03.1996
(73) Titulaire: SAT (Société Anonyme de Télécommunications), 75116 Paris (FR)
(72) Inventeur: Grappy, Jean, F-75625 Paris Cedex 14 (FR); Goepfer, Serge, F-75625 Paris Cedex 14 (FR); Gros-Bonnivard, Odette, F-75625 Paris Cedex 14 (FR); Tito-de-Morais, Manuel, F-75625 Paris Cedex 14 (FR); Prinzivalli, Ernest, F-75625 Paris Cedex 14 (FR)
(74) Mandataire: Cabinet Martinet & Lapoux

(56) Documents cités:
- FR-A- 2 687 259

## Description

La présente invention concerne un procédé de compression de données incluses dans des paquets constituant des unités de données de protocole échangées par des terminaux à travers un réseau de commutation de paquets.

Plus particulièrement, l'invention a trait à un procédé de compression de premiers paquets de données émis par un terminal en des seconds paquets de données transmis à travers un réseau de commutation de paquets, les premiers et seconds paquets comprenant chacun un en-tête ayant une longueur constante et un champ de données ayant au plus une longueur maximale, et un message émis par le terminal étant constitué de K+1 premiers paquets successifs, K étant un entier égal ou supérieur à un et différent a priori d'un message à l'autre.

Un tel procédé vise principalement à réduire le coût d'une communication entre deux terminaux, en diminuant le nombre de seconds paquets par rapport au nombre de premiers paquets correspondants. En effet, l'exploitant du réseau de commutation de paquets, tel que le réseau TRANSPAC (marque déposée), évalue le coût d'une communication entre deux terminaux en fonction d'une unité de taxe, appelée segment de tarification, qui peut être un sous-multiple entier de la longueur maximale du champ de données des paquets dans le réseau. Typiquement, la longueur maximale des champs de données est de 128 octets, et un segment de tarification comporte 64 octets. Par conséquent, les usagers ont tout intérêt à diminuer le nombre de paquets ou de segments transmis et à remplir totalement les paquets transmis ou la moitié des champs de données.

La compression doit en outre respecter les contraintes imposées par le réseau de commutation de paquets. Les seconds paquets de données compressées doivent avoir un format identique aux premiers paquets de données afin que le réseau ignore que les données des paquets ont subi une compression. En d'autres termes, la compression doit être transparente au format des paquets.

L'invention ne concerne donc pas une compression de données particulièrement mise en oeuvre dans un équipement DATAMISER (marque déposée), selon laquelle non seulement les données dans les champs de données des premiers paquets sont compressées mais également les indications contenues dans les en-têtes des premiers paquets. Les seconds paquets ont alors un format différent de celui des premiers paquets.

Pour pallier cet inconvénient, seulement les données dans chacun des premiers paquets sont compressées de sorte que chaque second paquet contient l'en-tête d'un premier paquet et les données compressées de ce premier paquet. Cependant, le rendement d'une telle compression est très faible puisque le nombre de paquet ne diminue pas, et rares sont les champs de données de seconds paquets ayant une longueur inférieure à une demi-longueur maximale.

La FR-A-2687259 propose de plus réduire le nombre de seconds paquets en procédant aux étapes suivantes :
- compression des champs de données premier paquet par premier paquet en des champs de données compressées,
- introduction d'un sous-en-tête à deux octets précédant chaque champ de données compressées, qui permet de reconstruire le premier paquet correspondant, le sous-en-tête comprenant des bits particuliers contenus dans l'en-tête du premier paquet ainsi que la longueur du champ de données compressées,
- concaténation des champs de données compressées avec leurs sous-en-têtes en une suite de données concaténées, et
- découpage de la suite de données concaténées en des éléments de données à la longueur maximale des paquets, et
- formation de chaque second paquet avec un élément de données et un en-tête ne correspondant à aucun des en-têtes des premiers paquets.

Ce second procédé présente encore un inconvénient se retrouvant dans le procédé précédent. Les données sont compressées paquet par paquet, indépendamment de la constitution de message, dit également séquence, par une succession de premiers paquets, c'est-à-dire l'entier K est toujours égal à zéro. En effet, un message est une suite continue de caractères émis par un terminal qui n'est découpé en paquets que pour satisfaire les impératifs de commutation dans le réseau de paquets. En ignorant les messages, en tant qu'unités de données de niveau supérieur à celui des paquets, les procédés connus ne peuvent comprimer une chaîne de caractères dans un message qui est incluse partiellement à la fin d'un premier paquet donné et au début d'un premier paquet suivant le premier paquet donné.

Un sous-en-tête de reconstruction est systématiquement associé à chacun des champs de données compressées, c'est-à-dire à chacun des premiers paquets de données et est contenu dans le champ de données d'un second paquet. La longueur des données compressées d'un message dans les champs de données de seconds paquets est alors pénalisée par le nombre de sous-en-têtes et donc de premiers paquets de message.

Enfin, selon le procédé de la FR-A-2687259, les en-têtes des seconds paquets sont indéfinis par rapport aux en-têtes des premiers paquets, ce qui limite la transparence du procédé de compression par rapport au réseau de commutation. Notamment, des bits particuliers, tels que les bits M et D selon l'avis X.25 du C.C.I.T.T., dans les en-têtes des premiers paquets ne sont pas reportés dans les en-têtes des seconds paquets. Par exemple, le réseau ne peut regrouper des seconds paquets de manière à adapter la taille de groupes de seconds paquets à celle de paquets de données traitées dans un terminal destinataire. Des demandes d'accusé de réception de premier paquet contenues dans les en-têtes des premiers paquets ne sont pas reportées dans les en-têtes des seconds paquets. Ainsi, le réseau peut regrouper à tort une suite de seconds paquets au milieu de laquelle une demande d'accusé de réception est prévue (bit D="1").

L'objectif principal de l'invention est d'augmenter le gain de la compression de données par rapport aux procédés connus précités. En particulier, l'invention considère, comme unité de données, chaque message composé de K+1 premiers paquets, K étant un entier tel que K ≥ 1.

A cette fin, un procédé de compression tel que défini dans l'entrée en matière est caractérisé par les étapes suivantes :
- concaténation progressive des champs de données des K+1 premiers paquets de chaque message en des données concaténées,
- compression progressive des données concatenées de chaque message en des données compressées selon un algorithme de compression prédéterminé,
- introduction d'un mot de fin de message à la fin des données compressées de chaque message, et
- formation progressive de seconds paquets ayant des champs de données remplis progressivement par les données compressées au plus jusqu'à la longueur maximale.

La concaténation des champs de données des premiers paquets dans chaque message préalablement à toute compression permet de réunir les caractères d'une chaîne de caractères répartis dans deux premiers paquets successifs. La reconnaissance de cette chaîne de caractères par l'algorithme de compression contribue à diminuer la longueur des données compressées. Selon la technique antérieure, une telle chaîne de caractères est décomposée en au moins deux chaînes de caractères ou plus, partagées par les deux premiers paquets successifs.

Puisque l'invention est attachée au concept de message, celle-ci a également pour objectif d'analyser le contenu des en-têtes de chacun des premiers paquets. Cette analyse guide la concaténation des champs de données en fonction des messages mais également de demandes particulières du terminal. L'information essentielle contenue dans les en-têtes des premiers paquets peut être alors reportée dans les en-têtes des seconds paquets. Dans ces conditions, un dispositif de compression mettant en oeuvre le procédé de compression selon l'invention et inséré entre un terminal et un accès du réseau est complètement transparent.

Trois bits particuliers M, D et Q définis dans l'avis X.25 du C.C.I.T.T. sont essentiellement analysés.

Lorsque l'en-tête de chacun des premiers et seconds paquets comprend un premier bit M, le premier bit dans les K premiers paquets d'un message est à un premier état, et le premier bit dans le dernier premier paquet du message est à un état opposé audit premier état. Selon une première réalisation, le premier bit dans les en-têtes de seconds paquets dont le champ de données est à la longueur maximale et est terminé par des données compressées du message est audit premier état, et le premier bit dans l'en-tête d'un dernier second paquet contenant au moins le mot de fin de message du message et terminé par un mot de fin de message est à l'état opposé. Selon une seconde réalisation, le premier bit dans les en-têtes des seconds paquets est systématiquement audit état opposé puisque la fin des messages dans les seconds paquets est marquée par un mot de fin de message.

Lorsque l'en-tête de chacun des premiers et seconds paquets comprend un second bit D, le second bit dans un premier paquet est à un premier état, quel que soit l'état du premier bit dans le premier paquet, lorsque ledit terminal souhaite recevoir un accusé de réception transmis par le terminal destinataire qui acquitte le premier paquet. Selon l'invention, les données dans un premier paquet contenant un second bit audit premier état ne sont pas concaténées et compressées avec les données de tout premier paquet suivant, les données compressées résultant de la compression des données dans le premier paquet contenant le second bit audit premier état sont immédiatement transmises dans au moins un second paquet, et un second paquet contenant au moins le mot de fin de message succédant auxdites données compressées résultant de la compression à un second bit audit premier état.

Lorsque l'en-tête de chacun des premiers et seconds paquets comprend un troisième bit Q, le troisième bit ne change d'état que du dernier premier paquet d'un premier message au premier paquet d'un second message suivant le premier message. Selon l'invention, le second paquet contenant le mot de fin de message succédant aux données compressées résultant de la compression des données du premier message ne contient pas d'autres données après ledit mot de fin de message, et les troisièmes bits des seconds paquets contenant des données compressées résultant des premier et second messages ont respectivement les états des troisièmes bits contenus dans les premiers paquets des premier et second messages.

Un autre objectif de l'invention consiste à optimiser le temps de transit des seconds paquets, ou plutôt à rechercher un temps de transit du paquet relativement court avec un nombre de seconds paquets par unité de temps relativement faible. Deux solutions sont préconisées par l'invention.

Selon une première solution, le procédé comprend un déclenchement d'une temporisation prédéterminée en réponse sensiblement à l'introduction de chaque premier mot de fin de message dans un second paquet en cours de formation, et la transmission dudit second paquet en cours de formation lorsque la temporisation a expiré même quand le second paquet en cours de formation n'a pas atteint la longueur maximale. Le champ de données de ce second paquet dont la formation est arrêtée par l'expiration de la temporisation est alors terminé par un mot de fin de message.

Selon une seconde solution, le procédé comprend un déclenchement d'une temporisation prédéterminée sensiblement dès le début de la formation de chaque second paquet, et l'introduction d'un mot de fin intermédiaire à la fin du champ de données dudit chaque second paquet lorsque la temporisation a expiré même quand ledit chaque second paquet n'a pas atteint la longueur maximale.

La temporisation prédéterminée peut être négociée entre ledit terminal et un autre terminal auquel les premiers paquets de données sont destinés, préalablement à l'émission des premiers paquets par ledit terminal.

L'invention concerne également un procédé de décompression de seconds paquets de données formés selon le procédé de compression selon l'invention. Ce procédé de décompression comprend les étapes suivantes:
- concaténation progressive des champs de données compressées de message précédant les mots de fin de message dans les seconds paquets en des groupes de données compressées concaténées ;
- suppression des mots de fin de message à la fin des groupes de données compressées concaténées ;
- décompression progressive des groupes de données compressées concaténées de message en des données décompressées de messages selon un algorithme de décompression réciproque de l'algorithme de compression prédéterminé ; et
- formation progressive de premiers paquets ayant des champs de données remplis progressivement par les données décompressées de messages au plus jusqu'à la longueur maximale.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une liaison entre deux terminaux de données d'usager avec des équipements de compression-décompression à travers un réseau de commutation de paquets ;
- la figure 2 montre la structure en niveaux des interfaces d'un équipement avec le terminal respectif et le réseau de commutation de paquets ;
- la figure 3 montre le format connu d'un paquet de données ;
- la figure 4 est un diagramme des étapes essentielles du procédé de compression selon l'invention, relatif à deux messages respectivement à trois et un premiers paquets avec premier bit particulier M positionné ;
- la figure 5 est un diagramme des étapes essentielles du procédé de compression selon l'invention, relatif à quatre messages respectivement à un, trois, un et un premiers paquets avec premier et second bits particuliers M et D positionnés ; et
- la figure 6 est un diagramme des première et dernière étapes essentielles du procédé selon l'invention, relatif à des messages analogues à ceux montrés à la figure 5 dans lesquels un troisième bit particulier Q est positionné.

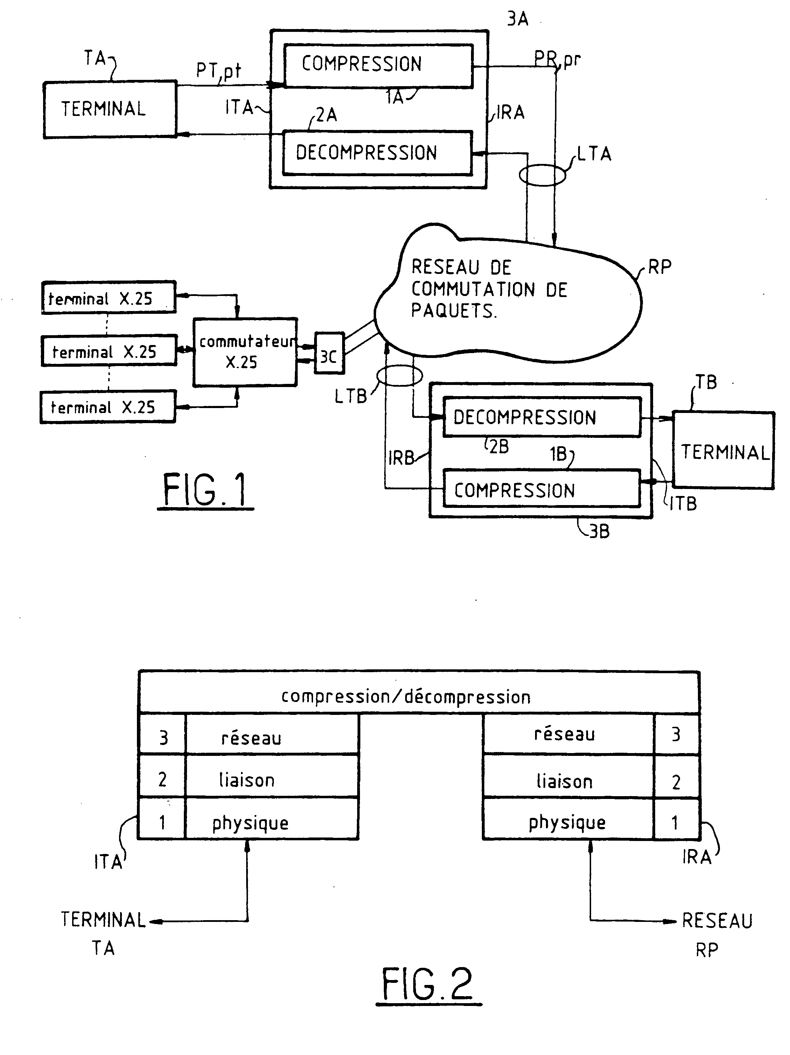

En référence à la figure 1, les procédés de compression et décompression selon l'invention sont mis en oeuvre dans des dispositifs de compression et décompression 1A et 2A réunis dans un équipement 3A. Cet équipement 3A est interconnecté entre un terminal TA de type équipement terminal de traitement de données ETTD et un accès d'un réseau de communication de paquets RP de type équipement de terminaison de circuit de données ETCD à travers une ligne téléphonique bidirectionnelle LTA. Au moins un autre terminal TB est relié au réseau RP par une ligne téléphonique bidirectionnelle LTB à travers un équipement 3B contenant un dispositif de compression 1B et un dispositif de décompression 2B. Il sera supposé que le terminal TA, en tant que terminal émetteur, entre en communication avec le terminal TB, en tant que terminal récepteur destinataire, bien que le terminal TA puisse être en communication avec un ou plusieurs autres terminaux simultanément à travers le réseau RP.

Les terminaux TA et TB et le réseau de communication de paquets sont conçus selon l'Avis X.25 du CCITT. Un terminal peut être un simple terminal d'usager, ou un ensemble de terminaux X.25 desservis par un commutateur de paquets X.25, comme montré par un équipement de compression-décompression 3C à la figure 1. Les procédés de compression et décompression mis en oeuvre dans les équipements 3A et 3B sont relatifs à une interface entre les trois couches basses et les quatre couches hautes selon les principes d'architecture de systèmes ouverts (Open System Interconnexion OSI) établis par l'ISO (International Standardization Organisation). Cette interface, comme illustré à la figure 2, est située juste au-dessus de la couche 3, dite couche réseau, qui assure l'établissement et la réception des communications ainsi que le routage d'informations entre terminaux d'usager à travers le réseau. Les compression et décompression sont ainsi situées au niveau des paquets selon l'avis X.25, en dessous de la couche transport qui contrôle de bout en bout le transfert des informations à travers le réseau.

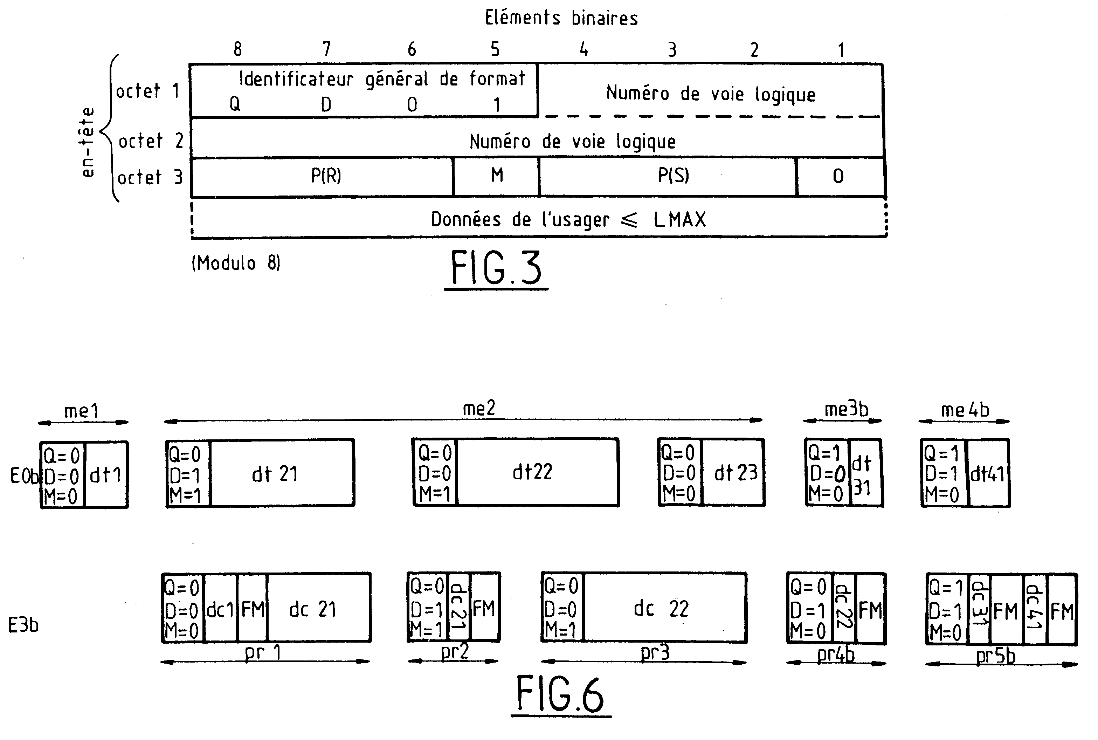

On se réfèrera donc dans la suite aux paquets définis dans l'avis X.25, en tant qu'unités de données de protocole, qui sont placés dans le champ d'information des trames du niveau ligne, c'est-à-dire de la couche 2 dite couche liaison selon l'architecture OSI. Comme cela apparaîtra ci-après, les en-têtes des paquets peuvent être modifiés dans les équipements. Toutefois, les en-têtes des paquets transmis par les équipements demeurent conformes à l'avis X.25. Puisque les compression et décompression ne sont appliquées qu'à des paquets de données, le format de ceux-ci est rappelé ci-après en référence à la figure 3 pour une numérotation de paquets de données réalisée séquentiellement modulo 8 suivant chaque sens de transmission, sur un circuit virtuel permanent ou pour une communication virtuelle.

**L'en-tête d'un paquet** de données comprend trois octets. Les quatre premiers bits du premier octet et le second octet représentent le numéro NVL de la voie logique, circuit virtuel permanent ou communication virtuelle, le long de laquelle est transféré le paquet. Selon l'invention, le numéro NVL ainsi que les cinquième et sixième bits à "1" et "O" du premier octet et le premier bit à "O" du troisième octet dans l'en-tête d'un paquet de données sont intangibles et sont reportés systématiquement dans les en-têtes des paquets de données sortants du dispositif de compression 1A, 1B ou du dispositif de décompression 2A, 2B.

Le troisième octet comprend un numéro de séquence de paquet en émission à trois bits P(S) variant de 0 à 7 et incrémenté successivement d'une unité modulo 8 chaque fois qu'un premier paquet de données est émis par le terminal TA. Les trois derniers bits du troisième octet contiennent un numéro de séquence de paquet en réception P(R) introduit dans un paquet à émettre par le réseau RP et en provenance du terminal récepteur TB ayant reçu des paquets de données de l'autre terminal TA après que le terminal TA ait émis des paquets de données qui contiennent un numéro P(S) au plus égal à P(R)-1 et qui ont été reçus par le terminal TB. Conformément à l'avis X.25, les numéros P(S) et P(R) sont modifiés suivant les deux sens de transmission par un équipement en raison des concaténations et regroupements opérés selon l'invention.

L'en-tête d'un paquet de données contient également trois mots binaires particuliers, en l'occurrence trois bits particuliers M, D et Q respectivement localisés dans le cinquième bit du troisième octet et les septième et huitième bits du premier octet. Les second et troisième bits particuliers D et Q étant utilisés moins fréquemment, ceux-ci sont supposés être, dans une première variante, sans signification et positionnés à l'état "O".

Le premier bit particulier M est lié au concept de message de données. Un message de données, qui constitue une unité de données du niveau transport 4, est une suite de données contiguës émises dans K paquets complets et un dernier paquet successifs par un terminal ou un accès du réseau de commutation de paquets, K étant un entier supérieur ou égal à zéro. Le bit M constitue une marque de données à suivre qui est mise à "1" dans tous les paquets de données, sauf dans le dernier paquet du message, pour indiquer que d'autres données du message vont suivre dans le paquet suivant. Le bit M dans le dernier paquet du message, que le message soit composé d'un seul paquet complet ou incomplet ce qui correspond à K=0, ou soit composé de plusieurs paquets, est toujours positionné à "0". Un paquet complet, dit également paquet plein, est un paquet dont le champ de données est plein et a une longueur maximale LMAX égale typiquement à 128 ou 256 octets.

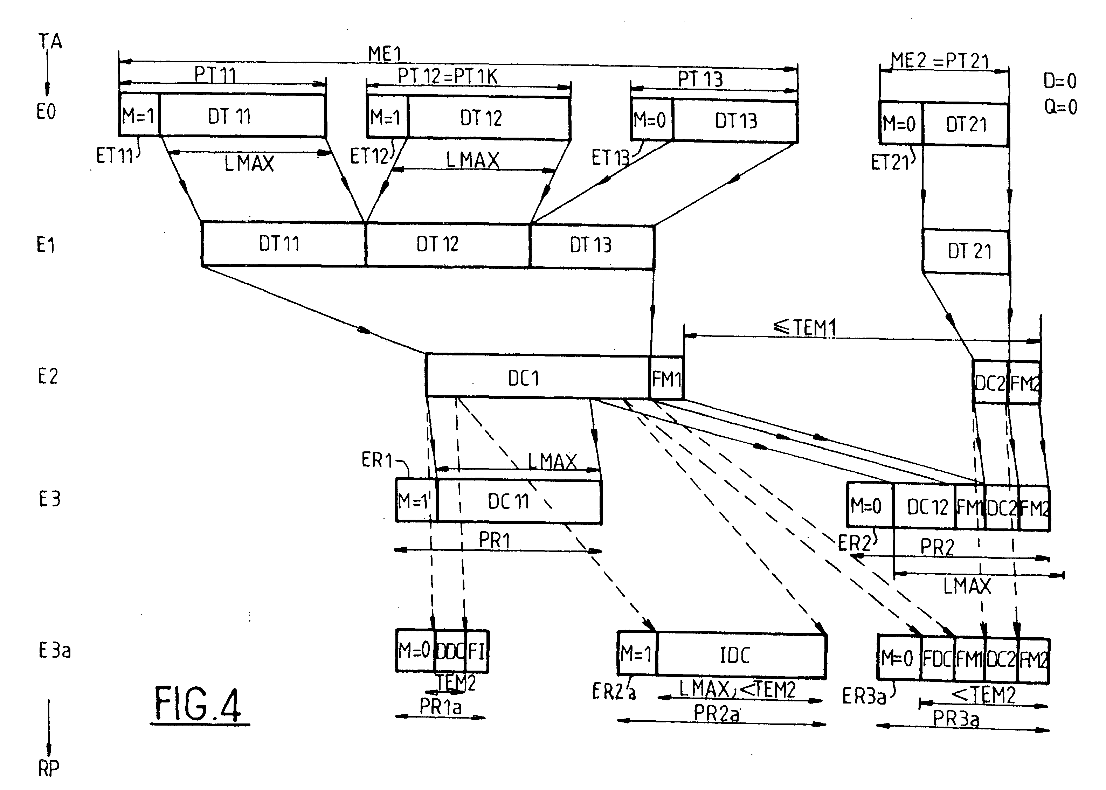

Par exemple, pour LMAX=128 octets, comme montré à une étape EO dans la figure 4, au cours d'une communication virtuelle donnée, un premier message ME1 est composé de K+1=3 premiers paquets PT11, PT12 et PT13 émis par le terminal TA. Les champs de données DT11 et DT12 des deux premiers paquets PT11 et PT12 sont complets et contiennent 128 octets. Le champ de données DT13 du dernier paquet PT13 du premier message ME1 est incomplet et contient par exemple 100 octets, soit un message ME1 de 356 octets. Un second message ME2 ne contient qu'un seul paquet PT21 qui est incomplet, le champ de données DT21 de ce paquet ne contenant que 70 octets par exemple.

En revenant à la figure 1, le dispositif de compression 1A et le dispositif de décompression 2A dans un même équipement 3A fonctionnent indépendamment l'un de l'autre. Une **compression** peut être réalisée dans le dispositif 1A et une décompression peut être réalisée dans le dispositif de décompression 2B dans l'autre équipement 3B selon le sens de transmission TA vers TB, sans que des compression et décompression soient réalisées respectivement dans les équipements 3B et 3A. Par exemple, le dispositif de compression 1B et le dispositif de décompression 2A peuvent être omis.

En outre, à l'intérieur d'un dispositif de compression 1A, 1B, respectivement d'un dispositif de décompression 2A, 2B, les circuits et communications virtuels sont indépendants. Les paquets de données de certains circuits et communications virtuels transitant à travers un dispositif de compression, respectivement décompression, peuvent subir une compression, respectivement décompression ; les paquets de données d'autres circuits et communications virtuels peuvent traverser le dispositif sans modification et sont dits en mode sans compression.

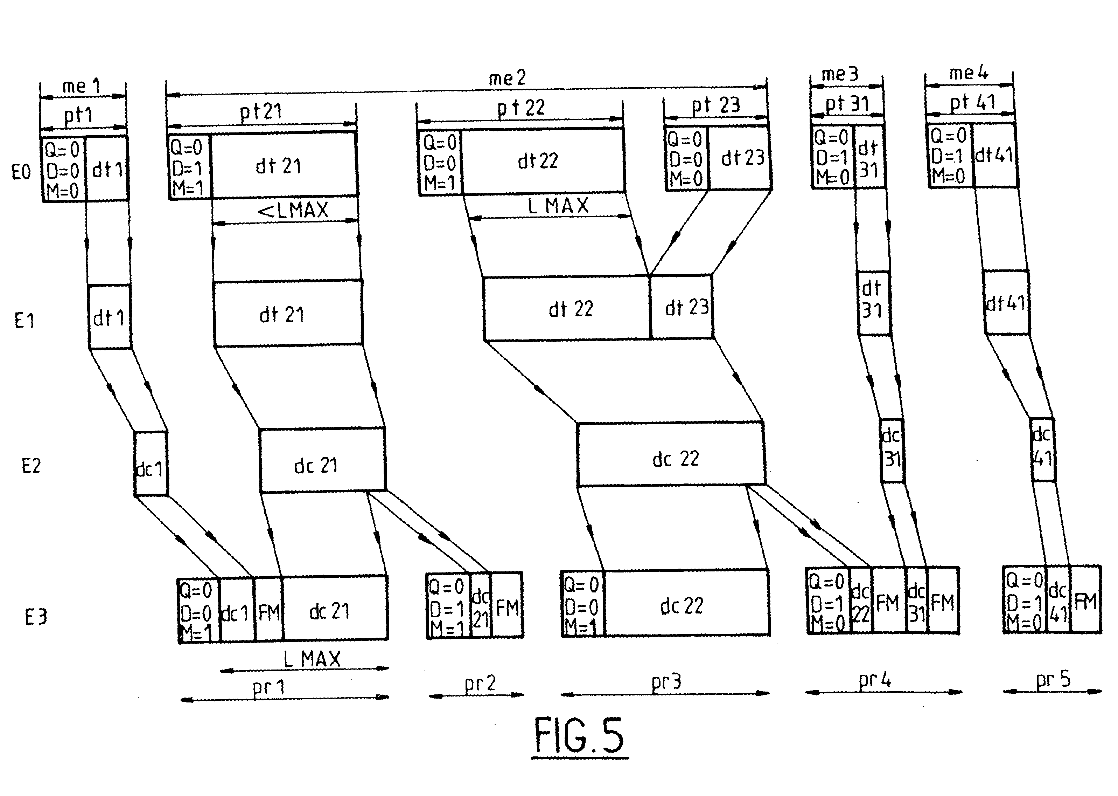

Lors de l**'établissement d'une communication virtuelle** depuis le terminal appelant TA, l'équipement 3A contrôle que le terminal distant appelé, tel que le terminal TB, dispose d'un dispositif de décompression 2B si la communication virtuelle est au moins unidirectionnelle et les paquets sont à compresser selon le sens TA vers TB, et/ou dispose d'un dispositif de compression 1B si la communication virtuelle est au moins unidirectionnelle et les paquets sont à compresser selon le sens TB vers TA, et/ou dispose de dispositifs de décompression et de compression 2B et 1B si la communication virtuelle est bidirectionnelle. Pour cela, l'équipement 3A vérifie la configuration du terminal appelé TB par comparaison avec des adresses de terminal écrites dans une table d'adresses programmée en mémoire. Si le terminal appelé ne possède pas de dispositifs de compression et décompression, les dispositifs 1A et 2A dans l'équipement 3A sont inactifs pour cette communication virtuelle qui est en mode sans compression. Comme cela apparaîtra dans la suite, l'étape de compression E2 dans les figures 4 et 5 est supprimée en mode sans compression.

Ainsi, lorsque l'équipement 3A reçoit un paquet d'appel transmis par le terminal appelant local TA, la communication est considérée comme compressible si l'adresse du terminal appelé TB incluse dans le paquet d'appel est contenue dans la table d'adresses. De même, lorsque l'équipement 3A reçoit un paquet d'appel transmis par le réseau RP depuis le terminal distant appelant TB, la communication est considérée comme compressible si l'adresse du terminal appelant TB incluse dans le paquet d'appel est contenue dans la table d'adresses. Lorsque l'un des terminaux TA, TB est un commutateur desservant plusieurs postes terminaux, l'équipement correspondant 3A, 3B vérifie également que la sous-adresse du poste terminal appelant ou appelé soit contenue dans la table d'adresses.

Puis, dès que les équipements 3A et 3B se sont reconnus, ils négocient des paramètres de la fonction de compression de données, tels qu'un paramètre P_{O} indiquant la ou les directions de transmission pour lesquelles la compression est utilisée, un paramètre P₁ indiquant le nombre de mots-codes représentatifs de la taille de dictionnaire, et un paramètre P₂ indiquant la longueur maximale de chaîne de caractères exprimée en octets, selon la Recommandation V.42 bis du CCITT, Genève 1990. Typiquement, le paramètre P₂ est compris entre 6 et 20.

Selon une réalisation préférée, trois tailles programmables de **dictionnaires** D1, D2 et D3 par exemple à 40 koctets, 20 koctets et 10 koctets sont prévues. Le nombre de dictionnaires de chaque taille est réservé en fonction du nombre de circuits virtuels à compresser. Deux dictionnaires sont réservés pour les deux sens de transmission de chaque circuit ou communication virtuel. Les dictionnaires sont affectés en fonction de la charge des circuits virtuels de l'équipement et des paramètres de négociation reçus en affectant en priorité les dictionnaires de grande taille.

Le tableau suivant donne la taille des dictionnaires réservés en fonction du nombre maximum de circuits virtuels CV à compresser au maximum égal à 160, pour une mémoire de dictionnaire ayant au moins une capacité de 80 x 40 = 3200 koctets, soit en pratique une mémoire de 4 Moctets.

| Nb. max. de CV | Nb. total de dico | Nb. de D1 à 40 ko | Nb de D2 à 20 ko | Nb de D3 à 10 ko |
|---|---|---|---|---|
| 40 | 80 | 80 | 0 | 0 |
| 50 | 100 | 60 | 40 | 0 |
| 60 | 120 | 40 | 80 | 0 |
| 70 | 140 | 20 | 120 | 0 |
| 80 | 160 | 0 | 160 | 0 |
| 90 | 180 | 0 | 140 | 40 |
| 100 | 200 | 0 | 120 | 80 |
| 110 | 220 | 0 | 100 | 120 |
| 120 | 240 | 0 | 80 | 160 |
| 130 | 260 | 0 | 60 | 200 |
| 140 | 280 | 0 | 40 | 240 |
| 150 | 300 | 0 | 20 | 280 |
| 160 | 320 | 00 | 00 | 320 |

Par exemple, pour 50 circuits virtuels CV, l'équipement dispose de 60 dictionnaires D1 à 40 koctets et 40 dictionnaires D2 à 20 koctets. Le gain en compression égal au rapport instantané du nombre de bits dans les paquets reçus PT au nombre de bits dans les paquets transmis PR est d'autant plus grand que la taille des dictionnaires est grande, et varie ainsi en fonction des tailles de dictionnaire sélectionnées, et donc du nombre de circuits et communications virtuels à compresser.

Des paramètres concernant la compression et les ressources sont échangés dans des paquets d'appel et de confirmation d'appel, ou bien dans des paquets de données après établissement de la communication entre les terminaux.

Après ces échanges protocolaires de paramètres et l'établissement de la communication entre les terminaux TA et TB, le **procédé de compression** selon l'invention est mis en oeuvre, par exemple dans le dispositif de compression 1A de l'équipement 3A auquel on se réfèrera dans la suite, lorsque la communication est en mode compression au moins suivant le sens TA vers TB. La compression des données utilise un algorithme adaptatif prédéterminé de type ZIV-LEMPEL, proche de celui spécifié dans la Recommandation V.42 bis.

Un tel algorithme de compression code des chaînes redondantes de plusieurs caractères à 1 octet en des mots-codes ayant une longueur variant entre 9 et 12 bits. Des dictionnaires de chaînes différents sont respectivement associés aux circuits virtuels établis et aux sens de transmission. Chaque dictionnaire est mis à jour dynamiquement en mode de fonctionnement normal au fur et à mesure que les octets des premiers paquets sortants du terminal TA sont reçus dans le dispositif de compression 1A. La longueur des mots-codes est en permanence comparée à celle des chaînes de caractères de manière à tester l'efficacité de la compression. Si le gain en compression est insuffisant, c'est-à-dire si un ensemble de mots-codes est sensiblement moins long ou ou bien est plus long que la chaîne de caractères correspondante, le dispositif de compression passe en mode transparent. Dans ce mode transparent, les données sont transmises sous forme non compressées après que l'équipement 3A ait signalé ce changement de mode de fonctionnement par des codes de commande à l'équipement distant 3B. Toutefois, le dictionnaire relatif à la communication virtuelle établie continue à être mis à jour dans les équipements 3A et 3B.

Conformément à l'invention, la compression de données n'est pas effectuée indépendamment premier paquet par premier paquet PT émis par le terminal TA, mais message par message.

Comme montré à la figure 4, le procédé de compression selon l'invention comprend essentiellement trois étapes E1, E2 et E3, après une étape initiale de réception de paquet EO. Toutes ces étapes sont décrites ci-après l'une après l'autre afin de faciliter la compréhension du procédé. En pratique, ces étapes sont réalisées en parallèle simultanément ; un octet dans un premier paquet PT est concaténé et compressé le cas échéant avec des octets suivants constituant une chaîne de caractères, mais sans attendre la réception des autres octets de ce premier paquet ou d'un premier paquet suivant.

Comme déjà indiqué, il est supposé que le terminal TA transmet initialement dans un circuit virtuel donné à l'équipement 3A un premier message ME1 composé de trois premiers paquets PT11, PT12 et PT13 et un second message ME2 composé d'un unique premier paquet PT21, les paquets PT13 et PT21 étant non pleins par exemple.

A l'étape EO, le dispositif de compression 1A détecte notamment une interruption de fanions, et sépare l'en-tête ET11, ET12, ET13, ET21 et le champ de données DT11, DT12, DT13, DT21 dans chaque premier paquet reçu PT11, PT12, PT13, PT21. Dans l'en-tête ainsi séparé, le cinquième bit M du troisième octet est analysé afin de préparer l'étape suivante E1.

Lorsque le **bit M** d'un premier paquet est à un premier état binaire "1", tel que le bit M dans les en-têtes ET11 et ET12 des premiers paquets PT11 et PT12, les données du champ DT11, DT12 du premier paquet sont concaténées avec les données précédentes du même message ME1 **à l'étape E1**. La concaténation consiste à écrire les données du message dans une mémoire tampon d'entrée de manière à être lues progressivement pour procéder progressivement à la compression à l'étape suivante E2 et à attendre la réception des données DT12, DT13 dans le premier paquet suivant PT12, PT13. Dès que le bit M passe à l'état "O" opposé au premier état binaire dans un premier paquet suivant, tel que le paquet PT13, signalant le dernier premier paquet du premier message ME1, la concaténation des champs de données DT11, DT12 et DT13 dans les paquets précédents PT11 et PT12 et le dernier paquet reçu PT13 est arrêtée dans la mémoire tampon d'entrée. Ainsi à l'étape E1, les données DT11, DT12 et DT13 dans le premier message ME1 sont concaténées comme elles l'étaient initialement avant paquétisation et émission par premiers paquets dans le terminal TA.

Lorsque le bit M est à l'état "0" dans l'en-tête d'un premier paquet, tel que l'en-tête ET21 du paquet PT21, suivant un paquet PT13 dont le bit M est également à l'état "O", ce paquet PT21 constitue à lui seul un message ME2. L'en-tête ET21 est simplement séparé des données DT21 qui sont progressivement écrites en mémoire tampon d'entrée et traitées à l'étape suivante E2 indépendamment des données dans les paquets précédents et suivants reçus dans le dispositif de compression 1A.

A **l'étape** suivante **E2**, toute chaîne de caractères, à nouveau réunie grâce à la concaténation, qui était contenue en partie à la fin du champ de données DT11, DT12 d'un paquet du message ME1 et en partie au début du champ de données DT12, DT13 du paquet suivant dans le message ME1, est convertie en un seul mot-code, ce qui améliore le rendement de la compression.

Les groupes de données concaténées (DT11, DT12, DT13) et (DT21) sont compressés suivant l'algorithme de compression prédéterminé de type ZIV-LEMPEL successivement et indépendamment les uns des autres à l'étape E2. Les données concaténées DT11, DT12 et DT13 du premier message ME1 sont compressées en des données compressées DC1 qui sont immédiatement suivies par un mot de fin de message FM1 qui indique la fin du premier message. Un autre mot de fin de message FM2 marque également la fin des données compressées DC2 des données DT21 du second message ME2. A toute fin de données compressées issues d'un premier paquet contenant un bit M="0" succède un mot de fin de message FM.

Le mot de fin de message FM ne comprend que deux octets quand le dispositif de compression 1A fonctionne en mode transparent. Par exemple, si les données comprimées DC1 ont une longueur sensiblement égale à celle des données DT11, DT12 et DT13, c'est-à-dire si le dispositif de compression 1A a constaté que la compression du premier message ME1 ne réduit pas la longueur du champ de données du premier message, les données non comprimées (DT11, DT12, DT13) = DC1 sont suivies par le mot de fin de message à deux octets à l'étape E2. Le mot de fin de message est composé d'un caractère d'échappement et d'un code de commande de fin de séquence, c'est-à-dire de fin de message, comme définis dans la Recommandation V.42 bis. Les données non compressées ne seront alors transmises qu'après la transmission d'un mot-code de passage au mode transparent PMT du dispositif 1A au dispositif 2B.

Lorsque le dispositif de compression 1A fonctionne en mode compression, le mot de fin de message FM1, FM2 est un mot-code de commande analogue au code FLUSH selon la Recommandation V.42 bis. Le mot FM1, FM2 comprend alors 9 à 12 bits prédéterminés.

Les données ainsi compressées DC1, DC2 avec le mot de fin de message respectif FM1, FM2 sont ainsi concaténées, comme montré à l'étape E2 dans la figure 4.

A **l'étape** suivante **E3**, les champs de données de seconds paquets PR1, PR2 à transmettre vers le réseau de commutation de paquets RP sont remplis progressivement par les données compressées à l'étape E2.

Selon l'exemple illustré à la figure 4, une première partie DC11 des données compressées DC1 du premier message ME1 ayant la longueur maximale LMAX remplit complètement le second paquet PR1. En pratique, ce second paquet PR1 de données compressées commence à être constitué à l'étape E3 avant la fin de la réception complète du premier paquet PT11 transmis par le terminal TA. Puis une seconde et dernière partie DC12 des données comprimées DC1 du premier message ME1 sont introduites au début du champ de données du second paquet suivant PR2 avec le mot de fin de message FM1. Sous réserve de l'expiration d'une temporisation TEM, les données compressées DC2 du second message ME2 sont également groupées avec la fin des données comprimées DC12 du premier message ME1 dans le second paquet PR2. Selon la figure 4, les données DC2 avec le mot de fin de message MF2 ne remplissent pas totalement le paquet PR2. Ces opérations de remplissage de seconds paquets et de groupage de données compressées sont effectuées au moyen de files d'attente de sortie.

Si la longueur de l'ensemble des données DC12 et DC2 et des mots de fin de message FM1 et FM2 est supérieure à LMAX, par exemple les données DC2 sont introduites pour partie dans le paquet PR2 qui est alors plein et pour partie dans le second paquet suivant qui ne peut contenir que le mot de fin de message FM2.

Dès qu'un second paquet, tel que le paquet PR1, est plein, celui-ci est transmis par le dispositif 1A vers le réseau RP. Toutefois, de préférence, un second paquet n'attend pas d'être complètement rempli pour être transmis vers le réseau RP, puisqu'une telle attente risquerait de bloquer la transmission en ne transmettant que partiellement un message occupant plusieurs seconds paquets et en différant la transmission de la fin du message.

Selon l'invention, une **temporisation TEM1** est déclenchée dans le dispositif de compression 1A en réponse au fanion de fermeture succédant au dernier premier paquet d'un message et donc quasiment en réponse au premier mot de fin de message FM1 introduit dans un second paquet, tel que le paquet PR2. Tant que la temporisation TEM1 n'a pas expirée, le paquet PR2 est rempli par les données compressées suivantes, telles que les données DC2 avec le mot de fin de message respectif FM2, que les données comprimées suivantes soient issues d'un ou plusieurs messages. Si le paquet PR2 est complètement rempli et atteint la longueur LMAX, avant l'échéance de la temporisation TEM1, le paquet plein PR2 est immédiatement transmis au réseau RP. Par contre, si à l'échéance de la temporisation TEM1 le paquet PR2 est partiellement rempli de données compressées, celui-ci est transmis au réseau RP sans attendre la compression partielle ou entière des données du message en cours de réception ou suivant non encore reçues.

La temporisation TEM1 est programmable dans le dispositif de compression 1A. Elle est typiquement comprise entre 100 et 300 ms pour un débit de 9600 bit/s et une longueur maximale standard de champ de données de paquet LMAX = 128 octets. Elle peut être négociée avant l'établissement de la communication virtuelle entre les terminaux afin de l'adapter aux débits des circuits et communications virtuels et aux caractéristiques de compression. Lorsque la temporisation TEM1 est élevée, celle-ci diminuera le nombre de seconds paquets et donc le nombre de segments de tarification transmis au réseau RP au détriment du temps de transit des paquets entre les équipements 3A et 3B. La temporisation TEM1 représente quasiment le temps de transit maximal d'un message après que le dispositif de compression ait reçu le dernier premier paquet du message.

Selon une seconde réalisation, la diminution du temps de transit est privilégiée par rapport à la diminution du nombre de seconds paquets de données compressées. Cette seconde réalisation est intéressante lorsque les équipements 3A, 3B sont reliés à un réseau de commutation de paquets privé, en tant que réseau RP, dans lequel le coût de la communication n'est pas tarifé au nombre de segments de tarification. Plutôt que de retenir un second paquet PR2 entre deux messages ME1 et ME2 comme dans la première réalisation précédente, une **temporisation TEM2** également programmable est déclenchée dès le début du remplissage du champ de données d'un second paquet et à une durée égale sensiblement au temps de transit maximum d'un second paquet et non d'un message, indépendamment de l'état du bit M. Ainsi, par exemple comme montré à une étape E3a à la figure 4, remplaçant l'étape E3 précédemment décrite, l'expiration de la seconde temporisation TEM2 pendant la réception du premier message ME1 provoque le rangement d'un mot de fin intermédiaire FI dans un premier paquet PR1a à la suite du début DDC des données compressées DC1. Le mot de fin intermédiaire FI peut succéder à un mot-code quelconque dans les données compressées. Puis une partie intermédiaire IDC des données compressées DC1 remplit complètement un second paquet PR2a pendant une durée inférieure à TEM2. Puis la fin FDC des données DC1 avec le mot de fin de message FM1 et les données compressées DC2 du message suivant avec le mot de fin de message FM2 sont transmises dans un troisième second paquet PR3a dans la mesure où le premier paquet PT21 est reçu et compressé avant l'expiration de la temporisation TEM2 déclenchée par le remplissage du paquet PR3a avec la fin FDC des données compressées DC1.

A l'étape E3 (ou E3a), les en-têtes des seconds paquets PR1, PR2 (ou PR1a, PR2a, PR3a) sont formatés comme montré à la figure 3, afin que l'équipement 3A soit transparent aux communications. En d'autres termes, l'insertion de l'équipement 3A entre le terminal 1A et le réseau RP ne nécessite aucune adaptation du réseau et du terminal, ni de modification des paramètres d'abonnement du terminal d'usager 1A au réseau RP. En référence aux figures 1 et 2, l'équipement 3A simule le réseau RP sur son interface ITA avec le terminal 1A, et simule le terminal TA sur son interface IRA avec le réseau RP. En particulier, l'équipement est transparent au bit particulier M ainsi qu'à deux autres bits particuliers Q et D qui sont positionnés dans les en-têtes des seconds paquets aux mêmes emplacements que dans les en-têtes des premiers paquets.

Selon une première variante montrée à la figure 4, le bit M dans l'en-tête ER1, ER2a d'un second paquet terminé par des données compressées DC11, IDC issues d'un message ME1 est à l'état "1" ; en d'autres termes, le bit M dans un second paquet est positionné à "1" lorsque le champ de données DC11, IDC du second paquet à la fois est à la longueur maximale LMAX et n'est pas terminé par un mot de fin de message. Le **bit M** est alors à l'état "0" dans l'en-tête ER2, ER3a du dernier second paquet de données compressées PR2, PR3a contenant des données compressées d'un message ME1, lorsque ce dernier second paquet est terminé par un mot de fin de message FM2 marquant la fin dudit message ME1 ou d'un message suivant ME2 (excepté le cas où un second bit D est à "1" comme on le verra en référence à la figure 5).

Le réseau RP peut alors regrouper les paquets de données compressées avant de les transmettre au dispositif de décompression 2B du terminal distant destinataire TB lorsque celui-ci utilise une longueur maximale de paquet plus grande que la longueur maximale de paquet utilisée dans le terminal émetteur TA. Lorsque le réseau RP reçoit du terminal TA un ou plusieurs seconds paquets consécutifs pleins avec le bit M positionné à "1", le réseau regroupe les données compressées de ces paquets. Le réseau ne transmet un second paquet de données regroupées au dispositif 2B qu'après avoir rempli ce paquet, ou qu'après avoir reçu ce paquet avec un bit M = "0" qui termine le message.

Puisque selon l'invention, la fin des données compressées d'un message ME1 est marquée par un mot de fin de message FM1 dans le dernier second paquet PR2, PR3a du message compressé, le positionnement du bit M dans les paquets de données compressées n'est pas utilisé selon une seconde variante. Les bits M dans tous les seconds paquets sont alors systématiquement à "0". Dans le dispositif de décompression 2B associé au terminal distant TB, l'absence d'un mot de fin de message FM à la fin d'un second paquet de données compressées reçu du réseau indique, comme un bit M = "1" dans un premier paquet, que des données compressées pour un même message suivent dans le second paquet suivant reçu. Cette seconde variante interdit tout regroupement des paquets par le réseau RP afin d'optimiser le temps de transit.

Les dispositifs de compression et décompression sont également transparents à un second bit particulier D, dit élément binaire de confirmation de remise, défini dans l'avis X.25. A l'état "1", le **bit D** indique que le terminal émetteur TA souhaite recevoir de la part du terminal destinataire TB un accusé de réception de bout en bout du paquet émis avec le bit D = "1", au moyen du numéro de séquence de paquets en réception P(R). Ce mécanisme garantit au terminal TA que le paquet de données a été reçu et acquitté par le terminal destinataire TB.

En outre, lorsque le bit D dans l'en-tête d'un paquet appartenant à un message de plusieurs paquets et ayant le bit de données à suivre M également à l'état "1" est à l'état "1", le paquet n'est pas obligatoirement plein, et peut avoir une longueur inférieure à la longueur maximale LMAX, comme le paquet pt21 à la figure 5.

La figure 5 montre plusieurs exemples de combinaison de bits D et Q et de groupage de données, la fréquence du bit D à l'état "1" étant volontairement augmentée par rapport à la pratique. Les messages me, les premiers et seconds paquets pt et pr et les champs de données non compressées dt et de données compressées dc sont désignés par des repères en minuscules analogues à ceux employés dans la figure 4. Il est supposé que le terminal TA émet quatre messages : un premier message me1 avec un premier paquet pt1 sans demande d'accusé de réception (D=0), un second message me2 avec K+1=3 premiers paquets pt21, pt22 et pt23, le paquet pt21 contenant un bit de confirmation D="1", et des troisièmes et quatrièmes messages me3 et me4 contenant chacun un premier paquet pt3 et pt4 avec bit de confirmation D="1". Pour simplifier la figure 5, les temporisations TEM1, TEM2 ne sont pas considérées, ou les seconds paquets correspondants pr1 à pr5 sont transmis par le dispositif de compression 1A bien avant l'expiration des temporisations respectives.

Lorsque le bit D est à l'état "1" dans un premier paquet plein ou non plein émis par le terminal TA, il interdit toute concaténation et compression avec les données dt22 du premier paquet suivant pt22 aux étapes E1 et E2 dans le dispositif de compression 1A. Cette interdiction est appliquée naturellement lorsque le bit M est à "0" dans le premier paquet reçu, tel que le paquet pt31 ou pt41, mais également lorsque le bit M est à "1" dans le premier paquet reçu, tel que le paquet pt21, indiquant que celui-ci appartient à un message me2 à suivre dans le paquet suivant pt22. Ainsi, au moins la fin des données compressées dc21, dc31, dc41 du premier paquet contenant le bit D à "1" est immédiatement transmise dans un second paquet pr2, pr4, pr5 ayant un en-tête contenant l'état respectif du bit M et le bit D = "1". La fin du champ de données du second paquet avec un bit D = "1" est marquée par un mot de fin FM, quelle que soit la valeur du bit M dans ce second paquet. Le second paquet, tel que le paquet pr4, peut contenir des données compressées dc22 de la fin du message précédent me2, suivies d'un mot de fin de message FM. Selon une autre possibilité illustrée par les données compressées dc21 du paquet pt21, les données compressées du paquet pt21 ayant le bit D à "1" pour partie terminent de remplir un second paquet précédent pr1 dont le bit D est à "0" et le bit M est à "1" puisque le paquet pr1 est plein et terminé par des données dc21 à suivre dans le second paquet suivant pr2 du message précédent me2, et pour partie sont contenues seulement avec un mot de fin de message FM dans le second paquet suivant pr2 dont le bit D est à "1" pour demander un acquittement du premier paquet pt21 et dont le bit M est la copie du bit M de premier paquet pt21. Selon l'exemple illustré, le bit M du paquet pr2 est à "1" comme celui du paquet pt21 pour indiquer que des données du message me2 sont à suivre dans le second paquet suivant pr3.

Le troisième bit particulier Q auquel sont également transparents les dispositifs de compression et décompression est un élément binaire qualificatif défini dans l'Avis X.25. Le **bit Q** est à la disposition de l'usager d'un terminal émetteur qui désire émettre des données sur plus d'un niveau et permet de qualifier les données émises sur deux niveaux. Par exemple, le bit Q identifie un niveau de protocole utilisateur par rapport à des niveaux supérieurs, tels que la couche transport, ou encore différencie les données proprement dites par rapport à des informations de contrôle de procédure. Selon l'avis X.25, le terminal émetteur met à la même valeur le bit Q de tous les paquets de données compris dans une séquence complète, c'est-à-dire dans un message. Lorsqu'un seul niveau de données est utilisé dans une voie logique, le bit Q est toujours mis à "0", comme supposé à la figure 4.

Plutôt que d'ajouter systématiquement une nouvelle information aux données compressées, comme par exemple un sous-en-tête dans les seconds paquets, au détriment du gain en compression, le bit Q est transmis, selon l'invention, dans l'en-tête proprement dit des seconds paquets pr avec données compressées dc.

Tant que le bit "Q" dans les premiers paquets dont les données sont à compresser ne change pas de valeur, le dispositif de compression 1A procède au groupage des données, c'est-à-dire à la concaténation, à la compression et à la formation des seconds paquets comme décrit précédemment en référence aux étapes EO à E3 ou E3a dans les figures 4 et 5. Dès que le bit Q change de valeur, c'est-à-dire passe de l'état "0" à "1" ou de l'état "1" à "0" dans un premier paquet émis par le terminal émetteur TA, ce changement d'état du bit Q provoque l'émission du second paquet de données compressées en cours de constitution, c'est-à-dire après compression des données du dernier premier paquet précédant le changement d'état du bit Q et insertion d'un mot de fin de message FM dans ledit second paquet en cours de constitution.

Par exemple, dans la figure 6 est prévue une étape initiale EO6 qui se distingue de l'étape EO dans la figure 5 par le remplacement du bit Q="0" dans les deux derniers messages me3 et me4 par un bit Q="1" dans des messages me3b et me4b. Le message me3b diffère du message m3 par un bit D positionné à "0". Le message me4b est identique au message me4. Les concaténation et compression des données message par message aux étapes E1 et E2 montrées à la figure 5 demeurent inchangées. A la dernière étape de groupage et transmission de données compressées E3b selon cet exemple montré à la figure 6, les seconds paquets pr1, pr2 et pr3 précédant la fin des données compressées provenant de premiers paquets avec le bit Q="0" demeurent inchangés. Avant que le bit Q maintenu à "0" dans les deux premiers messages me1 et me2 bascule à "1" à partir du message me3, les dernières données compressées dc22 précédant la transition d'états "0" à "1" du bit Q sont immédiatement transmises dans un second paquet pr4b qui contient la fin des données dc22 suivi du mot de fin de message FM relatif au second message me2. Puis, dans un second paquet suivant pr5b avec le bit Q à l'état "1" sont transmises les données compressées dc31 du premier paquet suivant pt31 du message me3b avec, le cas échéant, les données compressées dc41 d'au moins un autre premier paquet suivant pt41 du message me4b, comme indiqué dans la figure 6.

Enfin, avant d'être transmis au réseau, chaque second paquet reçoit dans son en-tête un numéro de séquence de paquet P(S) depuis un compteur de sortie modulo 8 dans le dispositif de compression 1A. Le numéro diffère du numéro P(S) dans le ou les premiers paquets dont sont issues les données compressées incluses dans le second paquet puisque, par nature, le dispositif de compression 1A émet moins de seconds paquets qu'il ne reçoit de premier paquets du terminal. Par exemple, les numéros P(S) dans les premiers paquets PT11, PT12, PT13 et PT21 montrés à la figure 4 sont 7, 0, 1 et 2 tandis que les numéros P(S) dans les seconds paquets PR1 et PR2 sont 4 et 5.

Les opérations de décompression effectuées dans un dispositif de décompression 2B entrent également dans le cadre de l'invention. Ces opérations sont déduites des figures 4 à 6, en ordonnant les étapes E3 à E0 de bas en haut. Dans le dispositif de décompression, les étapes E3, E2, E1 et E0 concernent
- la réception des seconds paquets PR1, PR2,
- la concaténation progressive des champs de données compressées DC11, DC12, DC2 des messages précédant les mots de fin de message FM1, FM2 dans les seconds paquets en des groupes de données compressées concaténées DC1, DC2,
- la suppression des mots de fin de message FM1, FM2 à la fin des groupes de données compressées concaténées ;
- la décompression progressive des groupes de données compressées concaténées DC1, DC2 des messages en des données décompressées (DT11, DT12, DT13), DT21 des messages selon un algorithme de décompression réciproque de l'algorithme de compression prédéterminé ; et
- la formation progressive de premiers paquets PT11, PT12, PT13, PT21 ayant des champs de données DT11, DT12, DT13, DT21 remplis progressivement par les données décompressées des messages au plus jusqu'à la longueur maximale LMAX en fonction des bits M, D et Q dans les seconds paquets, un premier paquet ne contenant des données décompressées que d'un message.

## Revendications

1. Procédé de compression de premiers paquets de données (PT11, PT12, PT13 ; PT21) émis par un terminal (TA) en des seconds paquets de données (PR1, PR2) transmis à travers un réseau de commutation de paquets (RP), les premiers et seconds paquets comprenant chacun un en-tête (ET11, ET12, ET13, ET21 ; ER1, ER2) ayant une longueur constante et un champ de données (DT11, DT12, DT13, DT21 ; DC11 ; DC12, FM1, DC2, FM2) ayant au plus une longueur maximale (LMAX), et un message (ME1 ; ME2) émis par le terminal (TA) étant constitué de K+1 premiers paquets successifs (PT11, PT12, PT13), K étant un entier égal ou supérieur à un et différent d'un message à l'autre,
**caractérisé par** les étapes suivantes :
- concaténation progressive (E1) des champs de données (DT11, DT12, DT13 ; DT21) des K+1 premiers paquets de chaque message (ME1 ; ME2) en des données concaténées,
- compression progressive (E2) des données concatenées de chaque message en des données compressées (DC1 ; DC2) selon un algorithme de compression prédéterminé,
- introduction d'un mot de fin de message (FM1 ; FM2) à la fin des données compressées (DC1 ; DC2) de chaque message, et
- formation progressive (E3) de seconds paquets (PR1, PR2) ayant des champs de données (DC11 ; DC12, FM1, DC2, FM2) remplis progressivement par les données compressées au plus jusqu'à la longueur maximale (LMAX).

2. Procédé conforme à la revendication 1, selon lequel l'en-tête de chacun des premiers et seconds paquets comprend un premier bit (M), et le premier bit dans les K premiers paquets (PT11, PT12) d'un message est à un premier état, et le premier bit dans le dernier premier paquet (PT3 ; PT4) du message est à un état opposé audit premier état, **caractérisé en ce que** le premier bit dans les en-têtes (ER1) de seconds paquets (PR1) dont le champ de données est à la longueur maximale (LMAX) et est terminé par des données compressées du message est audit premier état, et le premier bit dans l'en-tête (ER2) d'un dernier second paquet (PR2) contenant au moins le mot de fin de message (FM1) du message et terminé par un mot de fin de message (FM1, FM2) est à l'état opposé.

3. Procédé conforme à la revendication 1, selon lequel l'en-tête de chacun des premiers et seconds paquets comprend un premier bit (M), et le premier bit dans les K premiers paquets d'un message est à un premier état, et le premier bit dans le dernier premier paquet (PT3 ; PT4) du message est à un état opposé audit premier état, **caractérisé par** la mise systématique du premier bit dans les en-têtes des seconds paquets (PR1, PR2) audit état opposé.

4. Procédé conforme à l'une quelconque des revendications 1 à 3, comprenant un déclenchement d'une temporisation prédéterminée (TEM1) en réponse sensiblement à l'introduction de chaque premier mot de fin de message (FM1) dans un second paquet (PR2) en cours de formation, et la transmission dudit second paquet en cours de formation lorsque la temporisation a expiré même quand le second paquet en cours de formation n'a pas atteint la longueur maximale (LMAX).

5. Procédé conforme à l'une quelconque des revendications 1 à 3, comprenant un déclenchement d'une temporisation prédéterminée (TEM2) sensiblement dès le début de la formation de chaque second paquet (PR1a), et l'introduction d'un mot de fin intermédiaire (FI) à la fin du champ de données dudit chaque second paquet (PR1a) lorsque la temporisation a expiré même quand ledit chaque second paquet n'a pas atteint la longueur maximale (LMAX).

6. Procédé conforme à la revendication 4 ou 5, selon lequel la temporisation prédéterminée (TEM1 ; TEM2) est négociée entre ledit terminal (TA) et un autre terminal (TB) auquel les premiers paquets de données sont destinés, préalablement à l'émission des premiers paquets par ledit terminal (TA).

7. Procédé conforme à l'une quelconque des revendications 1 à 6, **caractérisé en ce que** le mot de fin de message (FM) a la taille de mots-codes de données compressées qui sont définis par l'algorithme de compression et auxquels succède le mot de fin de message.

8. Procédé conforme à l'une quelconque des revendications 1 à 7, **caractérisé en ce que** le mot de fin de message (FM) succédant à des données non compressées par l'algorithme de compression a la taille de deux caractères de données non compressées.

9. Procédé conforme à l'une quelconque des revendications 1 à 8, selon lequel l'en-tête de chacun des premiers et seconds paquets comprend un second bit (D), le second bit dans un premier paquet (pt21) étant à un premier état lorsque ledit terminal (TA) souhaite recevoir un accusé de réception du premier paquet, **caractérisé en ce que**
les données (dt21) dans un premier paquet (pt21) contenant un second bit audit premier état ne sont pas concaténées et compressées avec les données (dt22, dt23) de tout premier paquet suivant (pt22, pt23),
les données compressées (dc21) résultant de la compression des données dans le premier paquet (pt21) contenant le second bit audit premier état sont immédiatement transmises dans au moins un second paquet (pr1, pr2), et
un second paquet (pr2) contenant au moins le mot de fin de message (FM) succédant auxdites données compressées résultant de la compression (dc21) a un second bit audit premier état.

10. Procédé conforme à l'une quelconque des revendications 1 à 9, selon lequel l'en-tête de chacun des premiers et seconds paquets comprend un troisième bit (Q), le troisième bit ne changeant d'état que du dernier premier paquet (pt23) d'un premier message (me2) au premier paquet (pt31) d'un second message (me3b) suivant le premier message, **caractérisé en ce que** le second paquet (pr4b) contenant le mot de fin de message (FM) succédant aux données compressées (dc22) résultant de la compression des données (dt21, dt22, dt23) du premier message (me2) ne contient pas d'autres données après ledit mot de fin de message (FM), et les troisièmes bits des seconds paquets (pr1, pr2, pr3, pr4b ; pr5b) contenant des données compressées résultant des premier et second messages (me2 ; me3b) ont respectivement les états des troisièmes bits contenus dans les premiers paquets (pt21, pt22, pt23 ; pt31) des premier et second messages.

11. Procédé conforme à l'une quelconque des revendications 1 à 10, selon lequel des tailles de dictionnaires de mots-codes sont négociées par ledit terminal (TA) et un autre terminal (TB) auquel les premiers paquets sont destinés, préalablement à l'émission des premiers paquets par ledit terminal (TA), l'algorithme de compression faisant correspondre des chaînes de caractères représentatives de données dans chaque message respectivement à des mots-codes représentatifs de données compressées.

12. Procédé de décompression de seconds paquets de données (PR1, PR2) transmis à travers un réseau de commutation de paquets (RP) en des premiers paquets de données (PT11, PT12, PT13; PT21) reçus par un terminal (TA), les premiers et seconds paquets comprenant chacun un en-tête (ET11, ET12, ET13, ET21; ER1, ER2) ayant une longueur constante et un champ de données (DT11, DT12, DT13, DT21; DC11; DC12, FM1, DC2, FM2) ayant au plus une longueur maximale (LMAX), et un message (ME1; ME2) reçu par le terminal (TA) étant constitué de K+1 premiers paquets successifs (PT11, PT12, PT13), K étant un entier égal ou supérieur à un et différent d'un message à l'autre, **caractérisé par** les étapes suivantes:
concaténation progressive (E2) des champs de données compressées de message (DC11, DC12; DC2) précédant des mots de fin de message (FM1 ; FM2) dans les seconds paquets (PR1 ; PR2) en des groupes de données compressées concaténées;
suppression des mots de fin de message (FM1 ; FM2) à la fin des groupes de données compressées concaténées;
décompression progressive (E1) des groupes de données compressées concaténées en des données décompressées des messages (DT11, DT12, DT13 ; DT21) selon un algorithme de décompression réciproque d'un algorithme de compression prédéterminé; et
formation progressive (E0) de premiers paquets (PT11, PT12, PT13; PT21) ayant des champs de données (DT11, DT12, DT13 ; DT21) remplis progressivement par les données décompressées de messages au plus jusqu'à la longueur maximale (LMAX).

## Patentansprüche

1. Verfahren zur Kompression erster Datenpakete (PT11, PT12, PT13; PT21), die von einem Endgerät (TA) ausgesandt werden, in zweite Datenpakete (PR1, PR2), die durch ein Paketvermittlungsnetz (RP) übertragen werden, wobei die ersten und die zweiten Pakete jeweils einen Kopf (ET11, ET12, ET13, ET21; ER1, ER2) enthalten, der eine konstante Länge hat, und ein Datenfeld (DT11, DT12, DT13, DT21; DC11; DC12, FM1, DC2, FM2), das höchstens eine Maximallänge (LMAX) hat, wobei eine Nachricht (ME1; ME2), die vom Endgerät (TA) ausgesandt wird, aus K+1 aufeinander folgenden ersten Paketen (PT11, PT12, PT13) besteht, wobei K eine ganze Zahl größer oder gleich Eins ist und von einer Nachricht zur anderen verschieden ist,
**gekennzeichnet durch** die folgenden Schritte:
- fortschreitende Verkettung (E1) der Datenfelder (DT11, DT12, DT13; DT21) der K+1 ersten Pakete jeder Nachricht (ME1; ME2) zu verketteten Daten,
- fortschreitende Kompression (E2) der verketteten Daten jeder Nachricht zu komprimierten Daten (DC1; DC2) nach einem vorher festgelegten Kompressionsalgorithmus,
- Einfügen eines Nachrichtenendewortes (FM1; FM2) am Ende der komprimierten Daten (DC1; DC2) jeder Nachricht, und
- fortschreitende Bildung (E3) zweiter Pakete (PR1, PR2) mit Datenfeldern (DC11; DC12, FM1, DC2, FM2), die höchstens bis zur Maximallänge (LMAX) fortschreitend mit den komprimierten Daten gefüllt werden.

2. Verfahren nach Patentanspruch 1, in dem der Kopf jedes der ersten und der zweiten Pakete ein erstes Bit (M) aufweist und das erste Bit in den K ersten Paketen (PT11, PT12) einer Nachricht sich in einem ersten Zustand befindet und das erste Bit im letzten der ersten Pakete (PT3; PT4) der Nachricht im zu dem genannten ersten Zustand entgegengesetzten Zustand, **dadurch gekennzeichnet, dass** das erste Bit in den Köpfen (ER1) der zweiten Pakete (PR1), deren Datenfeld die Maximallänge (LMAX) hat und in komprimierten Daten der Nachricht endet, sich im genannten ersten Zustand befindet und das erste Bit im Kopf (ER2) eines letzten zweiten Paketes (PR2), das mindestens das Nachrichtenendewort (FM1) der Nachricht enthält und in einem Nachrichtenendewort (FM1, FM2) endet, sich im entgegengesetzten Zustand befindet.

3. Verfahren nach Patentanspruch 1, in dem der Kopf jedes der ersten und der zweiten Pakete ein erstes Bit (M) aufweist und das erste Bit in den K ersten Paketen einer Nachricht sich in einem ersten Zustand befindet und das erste Bit im letzten der ersten Pakete (PT3; PT4) der Nachricht im zu dem genannten ersten Zustand entgegengesetzten Zustand, **gekennzeichnet durch** das systematische Setzen des ersten Bits in den Köpfen der zweiten Pakete (PR1, PR2) in den genannten entgegengesetzten Zustand.

4. Verfahren nach irgendeinem der Patentansprüche 1 bis 3, die Auslösung einer vorbestimmten Verzögerungsschaltung (TEM1) im Wesentlichen in Reaktion auf die Einfügung jedes ersten Nachrichtenendewortes (FM1) in ein sich bildendes zweites Paket (PR2) umfassend und die Übertragung des genannten sich bildenden zweiten Paketes, wenn die Verzögerungszeit abgelaufen ist, selbst wenn das sich bildende zweite Paket die Maximallänge (LMAX) nicht erreicht hat.

5. Verfahren nach irgendeinem der Patentansprüche 1 bis 3, die Auslösung einer vorbestimmten Verzögerungsschaltung (TEM2) im Wesentlichen sofort bei Beginn der Bildung jedes zweiten Paketes (PR1a) umfassend und die Einfügung eines Zwischenendewortes (FI) am Ende des Datenfeldes des genannten zweiten Paketes (PR1a), wenn die Verzögerungszeit abgelaufen ist, selbst wenn das genannte zweite Paket die Maximallänge (LMAX) nicht erreicht hat.

6. Verfahren nach Patentanspruch 4 oder 5, in dem die vorbestimmte Verzögerungszeit (TEM1; TEM2) zwischen dem genannten Endgerät (TA) und einem anderen Endgerät (TB), für das die ersten Datenpakete bestimmt sind, vor Sendung der ersten Pakete durch das genannte Endgerät (TA) ausgehandelt wird.

7. Verfahren nach irgendeinem der Patentansprüche 1 bis 6, **dadurch gekennzeichnet, dass** das Nachrichtenendewort (FM) die Größe von Codewörtern für komprimierte Daten hat, die durch den Kompressionsalgorithmus definiert werden, und auf die das Nachrichtenendewort folgt.

8. Verfahren nach irgendeinem der Patentansprüche 1 bis 7, **dadurch gekennzeichnet, dass** das Nachrichtenendewort (FM), das auf nicht nach dem Kompressionsalgorithmus komprimierte Daten folgt, die Größe zweier nicht komprimierter Datenzeichen hat.

9. Verfahren nach irgendeinem der Patentansprüche 1 bis 8, in dem der Kopf jedes der ersten und der zweiten Pakete ein zweites Bit (D) enthält, wobei sich das zweite Bit in einem ersten Paket (pt21) in einem ersten Zustand befindet, wenn das genannte Endgerät (TA) eine Empfangsbestätigung des ersten Paketes empfangen möchte, **dadurch gekennzeichnet, dass**
die Daten (dt21) in einem ersten Paket (pt21), die ein zweites Bit im genannten ersten Zustand enthalten, nicht mit den Daten (dt22, dt23) jedes folgenden ersten Paketes (pt22, pt23) verkettet und komprimiert werden,
die komprimierten Daten (dc21), die sich aus der Kompression der Daten im ersten Paket (pt21) ergeben haben, das das zweite Bit im genannten ersten Zustand enthält, sofort in mindestens ein zweites Paket (pr1, pr2) übertragen werden, und
ein zweites Paket (pr2), das mindestens das Nachrichtenendewort (FM) enthält, das den genannten sich aus der Kompression (dc21) ergebenden, komprimierten Daten folgt, ein zweites Bit im genannten ersten Zustand aufweist.

10. Verfahren nach irgendeinem der Patentansprüche 1 bis 9, in dem der Kopf jedes der ersten und der zweiten Pakete ein drittes Bit (Q) enthält, wobei das dritte Bit seinen Zustand nur vom letzten der ersten Pakete (pt23) einer ersten Nachricht (me2) zum ersten Paket (pt31) einer zweiten Nachricht (me3b) ändert, die auf die erste Nachricht folgt, **dadurch gekennzeichnet, dass** das zweite Paket (pr4b), das das Nachrichtenendewort (FM) enthält, das auf die komprimierten Daten (dc22) folgt, die sich aus der Kompression der Daten (dt21, dt22, dt23) der ersten Nachricht (me2) ergeben haben, keine weiteren Daten nach dem genannten Nachrichtenendewort (FM) enthät, und die dritten Bits der zweiten Pakete (pr1, pr2, pr3, pr4b; pr5b), die komprimierte Daten aus der ersten und der zweiten Nachricht (me2; me3b) enthalten, jeweils die Zustände der dritten Bits haben, die in den ersten Paketen (pt21, pt22, pt23; pt31) der ersten und der zweiten Nachricht enthalten sind.

11. Verfahren nach irgendeinem der Patentansprüche 1 bis 10, in dem Größen von Codewortvorräten vom genannten Endgerät (TA) und einem anderen Endgerät (TB), für das die ersten Pakete bestimmt sind, vor Sendung der ersten Pakete durch das genannte Endgerät (TA) ausgehandelt werden, wobei der Kompressionsalgorithmus dafür sorgt, dass Ketten von Zeichen, die Daten bedeuten, in jeder Nachricht jeweils Codewörtern entsprechen, die komprimierte Daten bedeuten.

12. Verfahren zur Dekompression zweiter Datenpakete (PR1, PR2), die durch ein Paketvermittlungsnetz (RP) übertragen werden, in erste Datenpakete (PT11, PT12, PT13; PT21), die von einem Endgerät (TA) empfangen werden, wobei die ersten und die zweiten Pakete jeweils einen Kopf enthalten (ET11, ET12, ET13, ET21; ER1, ER2), der eine konstante Länge hat, und ein Datenfeld (DT11, DT12, DT13, DT21; DC11; DC12, FM1, DC2, FM2), das höchstens eine Maximallänge (LMAX) hat, wobei eine Nachricht (ME1; ME2), die vom Endgerät (TA) empfangen wird, aus K+1 aufeinander folgenden ersten Paketen (PT11, PT12, PT13) besteht, wobei K eine ganze Zahl größer oder gleich Eins ist und von einer Nachricht zur anderen verschieden ist,
**gekennzeichnet durch** die folgenden Schritte:
fortschreitende Verkettung (E2) der komprimierten Nachrichtendatenfelder (DC11, DC12; DC2), die Nachrichtenendewörtern (FM1; FM2) in den zweiten Paketen (PR1; PR2) vorangehen, zu Gruppen verketteter komprimierter Daten,
Unterdrückung der Nachrichtenendewörter (FM1; FM2) am Ende der Gruppen verketteter komprimierter Daten,
fortschreitende Dekompression (E1) der Gruppen verketteter komprimierter Daten in dekomprimierte Daten der Nachrichten (DT11, DT12, DT13; DT21) nach einem Dekompressionsalgorithmus, der zu einem vorher festgelegten Kompressionsalgorithmus reziprok ist, und
fortschreitende Bildung (E0) erster Pakete (PT11, PT12, PT13; PT21) mit Datenfeldern (DT11, DT12, DT13; DT21), die höchstens bis zur Maximallänge (LMAX) fortschreitend mit den dekomprimierten Daten von Nachrichten gefüllt werden.

## Claims

1. A method of compressing first data packets (PT11, PT12, PT13; PT21) emitted by a terminal (TA) into second data packets (PR1, PR2) transmitted through a packet switching network (RP), the first and second packets each comprising a header (ET11, ET12, ET13, ET21; ER1, ER2) having a constant length and a data field (DT11, DT12, DT13, DT21; DC11; DC12, FM1, DC2, FM2) having at maximum a maximum length (LMAX), and a message (ME1; ME2) emitted by the terminal (TA) being formed by K+1 successive first packets (PT11, PT12, PT13), K being an integer equal to or greater than 1 and different from one message to another,
**characterised by** the following steps:
- progressive concatenation (E1) of the data fields (DT11, DT12, DT13; DT21) of the K+1 first packets of each message (ME1; ME2) into concatenated data,
- progressive compression (E2) of the concatenated data of each message into compressed data (DC1; DC2) according to a predetermined compression algorithm,
- introduction of an end of message word (FM1; FM2) at the end of the compressed data (DC1; DC2) of each message, and
- progressive formation (E3) of second packets (PR1, PR2) having data fields (DC11; DC12, FM1, DC2, FM2) progressively filled by the compressed data at maximum to the maximum length (LMAX).

2. A method according to claim 1, wherein the header of each of the first and second packets comprises a first bit (M) and the first bit in the K first packets (PT11, PT12) of a message is in a first state and the first bit in the last first packet (PT3; PT4) of the message is in an opposite state to the said first state, **characterised in that** the first bit in the headers (ER1) of second packets (PR1) of which the data field is at the maximum length (LMAX) and is terminated by compressed data of the message is in the said first state and the first bit in the header (ER2) of a last second packet (PR2) containing at least the end of message word (FM1) of the message and terminated by an end of message word (FM1, FM2) is in the opposite state.

3. A method according to claim 1, wherein the header of each of the first and second packets comprises a first bit (M) and the first bit in the K first packets of a message is in a first state and the first bit in the last first packet (PT3; PT4) of the message is in an opposite state to the said first state, **characterised by** the systematic insertion of the first bit into the headers of the second packets (PR1, PR2) in the said opposite state.

4. A method according to any one of claims 1 to 3, comprising triggering of a predetermined time delay (TEM1) in response substantially to the introduction of each first end of message word (FM1) into a second packet (PT2) in the course of formation, and the transmission of the said second packet in the course of formation when the time delay has expired even when the second packet in the course of formation has not reached the maximum length (LMAX).

5. A method according to any one of claims 1 to 3, comprising triggering of a predetermined time delay (TEM2) substantially as from the start of the formation of each second packet (PR1a) and the introduction of an intermediate end word (FI) at the end of the data field of the said each second packet (PR1a) when the time delay has expired even when the said each second packet has not reached the maximum length (LMAX).

6. A method according to claim 4 or 5, wherein the predetermined time delay (TEM1; TEM2) is negotiated between the said terminal (TA) and another terminal (TB) for which the first data packets are intended, prior to the emission of the first packets by the said terminal (TA).

7. A method according to any one of claims 1 to 6, **characterised in that** the end of message word (FM) has the size of compressed data code words which are defined by the compression algorithm and after which follows the end of message word.

8. A method according to any one of claims 1 to 7, **characterised in that** the end of message word (FM) following data not compressed by the compression algorithm has the size of two non-compressed data characters.

9. A method according to any one of claims 1 to 8, wherein the header of each of the first and second packets comprises a second bit (D), the second bit in a first packet (pt21) being in a first state when the said terminal (TA) wishes to receive an acknowledgement of receipt of the first packet, **characterised in that**
the data (dt21) in a first packet (pt21) containing a second bit in the said first state are not concatenated and compressed with the data (dt22, dt23) of any following first packet (pt22, pt23),
the compressed data (dc21) resulting from the compression of data in the first packet (dt21) containing the second bit in the said first state are immediately transmitted in at least a second packet (pr1, pr2), and
a second packet (pr2) containing at least the end of message word (FM) following the said compressed data resulting from the compression (dc21) has a second bit in the said first state.

10. A method according to any one of claims 1 to 9, wherein the header of each of the first and second packets comprises a third bit (Q), the third bit changing state only from the last first packet (pt23) of a first message (me2) to the first packet (pt31) of a second message (me3b) following the first message, **characterised in that** the second packet (pr4b) containing the end of message word (FM) following the compressed data (dc22) resulting from the compression of the data (dt21, dt22, dt23) of the first message (me2) does not contain other data after the said end of message word (FM) and the third bits of the second packets (pr1, pr2, pr3, pr4b; pr5b) containing compressed data resulting from the first and second messages (me2; me3b) respectively have the states of the third bits contained in the first packets (pt21, pt22, pt23; pt31) of the first and second messages.

11. A method according to any one of claims 1 to 10, wherein code word dictionary sizes are negotiated by the said terminal (TA) and another terminal (TB) for which the first packets are intended, prior to the emission of the first packets by the said terminal (TA), the compression algorithm causing chains of characters representative of data in each message to correspond respectively to representative code words of compressed data.

12. A method of decompression of second data packets (PR1, PR2) transmitted through a packet switching network (RP) into first data packets (PT11, PT12, PT13; PT21) received by a terminal (TA), the first and second packets each comprising a header (ET11, ET12, ET13, ET21; ER1, ER2) having a constant length and a data field (DT11, DT12, DT13, DT21; DC11; DC12, FM1, DC2, FM2) having at maximum a maximum length (LMAX), and a message (ME1; ME2) received by the terminal (TA) being formed by K+1 successive first packets (PT11, P12, P13), K being an integer equal to or greater than 1 and different from one message to another, **characterised by** the following steps:
progressive concatenation (E2) of the compressed message data fields (DC11, DC12; DC2) preceding end of message words (FM1; FM2) in the second packets (PR1; PR2) into concatenated compressed data groups;
deletion of the end of message words (FM1; FM2) at the end of the concatenated compressed data groups;
progressive decompression (E1) of the concatenated compressed data groups into decompressed message data (DT11, DT12, DT13; DT21) in accordance with a reciprocal decompression algorithm of a predetermined compression algorithm and
progressive formation (E0) of first packets (PT11, PT12, PT13; PT21) having data fields (DT11, DT12, DT13; DT21) progressively filled by the decompressed message data at maximum to a maximum length (LMAX).
